# EUROPEAN PATENT APPLICATION

(11) **EP 4 258 436 A1**
(43) Date of publication of application: **11.10.2023**
(21) Application number: 21923426.7
(22) Date of filing: 14.12.2021
(51) Int. Cl.: H01M 50/181, H01M 50/188, H01M 50/559, H01M 50/562, H01M 50/153, H01M 50/169, H01M 10/04

(54) **BUTTON-TYPE SECONDARY BATTERY**

(30) Priority: 29.01.2021 KR 20210013206
(71) Applicant: LG Energy Solution, Ltd., Seoul 07335 (KR)
(72) Inventor: HWANGBO, Kwang Su, Daejeon 34122 (KR); MIN, Geon Woo, Daejeon 34122 (KR); KIM, Do Gyun, Daejeon 34122 (KR)
(74) Representative: Hoffmann Eitle
(86) International application number: PCT/KR2021/018960
(87) International publication number: WO 2022/164020

(57) **Abstract**

The present invention relates to a button-type secondary battery, and more particularly, to a button-type secondary battery, in which strong coupling force between a base plate, an electrode terminal, and an insulating gasket is generated while reducing a thickness of a top plate assembly formed by bonding the base plate covering an opening of a can body, in which an electrode assembly is inserted, the electrode terminal bonded to the base plate, and the insulating gasket insulating the base plate and the electrode terminal from each other.

The button-type secondary battery according to the present invention relates to a button-type secondary battery having a diameter greater than a height thereof, the button-type secondary battery including an electrode assembly, a can body into which the electrode assembly is inserted, a base plate configured to cover an opening of an upper end of the can body and bonded to the can body, an electrode terminal of which at least a portion is inserted into a through-hole formed inside the base plate to cover the through-hole, and an insulating gasket configured to insulate the electrode terminal from the base plate, wherein the electrode terminal, the insulating gasket, and the base plate are bonded to each other through thermal fusion.

## Description

### CROSS-REFERENCE TO RELATED APPLICATION

The present application claims the benefit of the priority of Korean Patent Application No. 10-2021-0013206, filed on January 29, 2021, which is hereby incorporated by reference in its entirety.

### TECHNICAL FIELD

The present invention relates to a button-type secondary battery, and more particularly, to a button-type secondary battery, in which strong coupling force between a base plate, an electrode terminal, and an insulating gasket is generated while reducing a thickness of a top plate assembly formed by bonding the base plate covering an opening of a can body, in which an electrode assembly is inserted, the electrode terminal coupled to the base plate, and the insulating gasket insulating the base plate and the electrode terminal from each other.

### BACKGROUND ART

In recent years, the price of energy sources increases due to the depletion of fossil fuels, the interest in environmental pollution is amplified, and the demand for eco-friendly alternative energy sources is becoming an indispensable factor for future life. Accordingly, studies on various power generation technologies such as solar power, wind power, and tidal power are continuing, and power storage devices such as batteries for more efficiently using the generated electrical energy are also of great interest.

Furthermore, as technology development and demand for electronic mobile devices and electric vehicles using batteries increase, the demands for batteries as energy sources are rapidly increasing. Thus, many studies on batteries which are capable of meeting various demands have been conducted.

In particular, in terms of materials, there is a high demand for lithium secondary batteries such as lithium ion batteries and lithium ion polymer batteries having advantages such as high energy density, discharge voltage, and output stability.

The secondary batteries are classified into cylindrical batteries and prismatic batteries, in which an electrode assembly is embedded in a cylindrical or prismatic metal can, and pouch-type batteries, in which an electrode assembly is embedded in a pouch-type case made of an aluminum laminate sheet according to shapes of battery cases. Also, recently, due to the trend of smaller wearable devices, the importance of developing small batteries such as button-type secondary batteries has been highlighted.

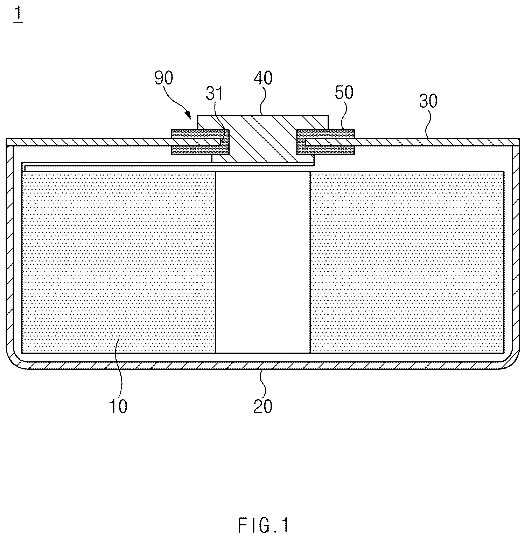

FIG. 1 is a cross-sectional view of a button-type secondary battery according to the related art.

Referring to FIG. 1, a button-type secondary battery 1, which is one of the button cells according to the related art, has a structure in which an electrode assembly 10 is inserted into an inner space of a body of a can body 20, and a base plate 30 covers an opening of the can body. In addition, a lower portion of a positive electrode terminal 40 of the button-type secondary battery is inserted into a through-hole formed in a center of the base plate 30 in the form of a rivet and thus is coupled to the base plate 30.

Since the base plate 30 coupled to the body of the can body 20 that has a negative pole has a negative pole, and the positive electrode terminal 40 has a positive pole, a structure that insulates the positive electrode terminal from the base plate is required. The structure is a gasket 50.

In the related art, as illustrated in FIG. 1, since the positive electrode terminal is coupled to the base plate in the form of a rivet, there is a limit in reducing the thickness. Therefore, the thickness of the top plate assembly 90, which is an assembly of the base plate, the positive electrode terminal, and the gasket, has no choice but to maintain a thicker state than a predetermined thickness, and thus, there is a problem in that the secondary battery having relatively low energy density and space efficiency have no choice but to be implemented.

In addition, there is a problem in that leakage of an internal gas or electrolyte is concerned because sealing and strong bonding are not performed at bonding surfaces between the base plate, the positive electrode terminal, and the gasket.

### DISCLOSURE OF THE INVENTION

### TECHNICAL PROBLEM

The present invention has been devised to solve the above problems, and an object of the present invention is to provide a button-type secondary battery, in which strong coupling force between a base plate, an electrode terminal, and an insulating gasket is generated while reducing a thickness of a top plate assembly formed by bonding the base plate covering an opening of a can body, in which an electrode assembly is inserted, the electrode terminal bonded to the base plate, and the insulating gasket insulating the base plate and the electrode terminal from each other.

### TECHNICAL SOLUTION

The button-type secondary battery according to the present invention relates to a button-type secondary battery having a diameter greater than a height thereof, the button-type secondary battery including an electrode assembly, a can body into which the electrode assembly is inserted, a base plate configured to cover an opening of an upper end of the can body and bonded to the can body, an electrode terminal of which at least a portion is inserted into a through-hole formed inside the base plate to cover the through-hole, and an insulating gasket configured to insulate the electrode terminal from the base plate, wherein the electrode terminal, the insulating gasket, and the base plate are bonded to each other through thermal fusion.

At least one of the electrode terminal or the base plate may be chromate surface-treated on a surface that is in contact with the insulating gasket.

Each of the electrode terminal and the base plate may be chromate surface-treated on a surface that is in contact with the insulating gasket.

Each of the electrode terminal and the base plate may be made of a metal material, wherein the metal material may be any one or more selected from SUS, nickel-plated carbon steel, and Al.

A PP-MAH (polypropylene modified with maleic anhydride) layer may be formed on a surface of the insulating gasket.

The insulating gasket may have a three-layered structure of a PP-MAH layer, a polypropylene (PP) layer, and a PP-MAH layer.

The chromate surface-treated portion of at least one of the electrode terminal or the base plate and the PP-MAH layer of the insulating gasket 150 may include portions that are hydrogen-bonded with each other.

The electrode terminal may include an insertion part inserted into the through-hole and a terminal plate part extending outward from an upper end of the insertion part and extending to have a plate shape, and a bottom surface of the terminal plate part, which is in contact with the insulating gasket, may be chromate surface-treated.

A top surface of the base plate facing the insulating gasket may be chromate surface-treated.

An outer circumferential surface of the insertion part, which is in contact with the insulating gasket, may be chromate surface-treated.

An inner surface of the base plate having a through-hole, which is in contact with the insulating gasket, may be chromate surface-treated.

The top plate assembly, in which the electrode terminal, the insulating gasket, and the base plate are bonded to each other, may have a thickness of 0.4 mm to 0.8 mm.

An edge of the base plate and the opening of the can body may be boned to each other by laser welding.

An insulating tape may be attached to a bottom surface of the base plate, wherein the insulating tape may be configured to insulate the base plate from the electrode assembly.

The electrode terminal may have a positive pole, and each of the can body and the base plate may have a negative pole.

### ADVANTAGEOUS EFFECTS

The button-type secondary battery according to the present invention may relate to the button-type secondary battery having the height greater than the diameter thereof, the button-type secondary battery including the electrode assembly, the can body into which the electrode assembly is inserted, the base plate configured to cover the opening of the upper end of the can body and bonded to the can body, the electrode terminal of which at least a portion is inserted into the through-hole formed inside the base plate to cover the through-hole, and the insulating gasket configured to insulate the electrode terminal from the base plate, wherein the electrode terminal, the insulating gasket, and the base plate are bonded to each other through thermal fusion. Therefore, the strong coupling force between the base plate, the electrode terminal, and the insulating gasket may be generated while reducing the thickness of the top plate assembly formed by bonding the base plate covering an opening of the can body, in which the electrode assembly is inserted, the electrode terminal bonded to the base plate, and the insulating gasket insulating the base plate and the electrode terminal from each other.

### BRIEF DESCRIPTION OF THE DRAWINGS

FIG. 1 is a cross-sectional view of a button-type secondary battery according to a related art.
FIG. 2 is a cross-sectional view of a button-type secondary battery according to Embodiment 1 of the present invention.
FIG. 3 is a cross-sectional view of an insulating gasket having a three-layered structure in the button-type secondary battery according to Embodiment 1 of the present invention.
FIG. 4 is a view illustrating hydrogen bonding between a chromate surface-treated portion and a PP-MAH layer in the button-type secondary battery according to Embodiment 1 of the present invention.
FIG. 5 is a cross-sectional view of a button-type secondary battery according to Embodiment 2 of the present invention.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

### Embodiment 1

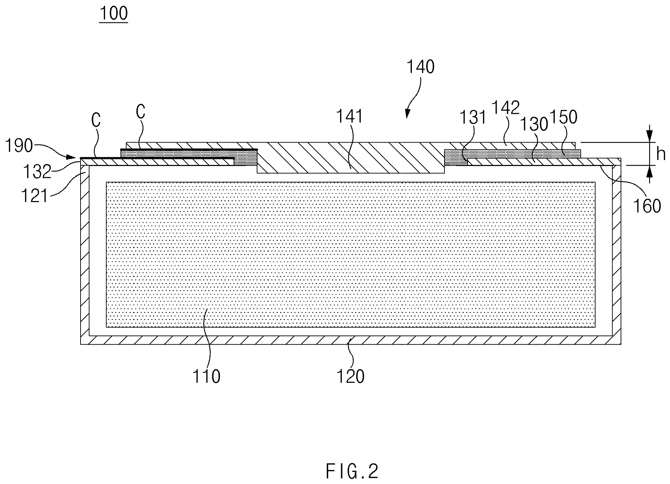

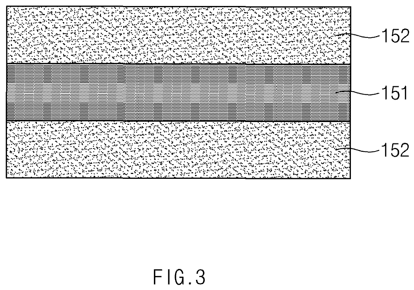

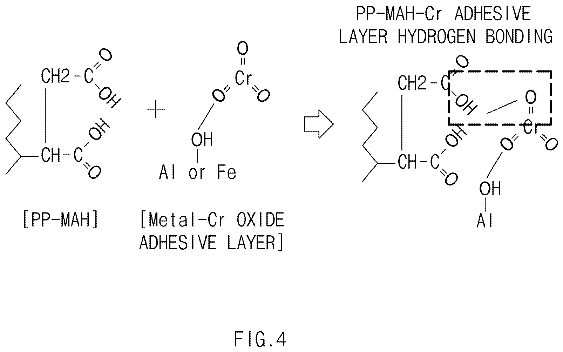

FIG. 2 is a cross-sectional view of a button-type secondary battery according to Embodiment 1 of the present invention. FIG. 3 is a cross-sectional view of an insulating gasket having a three-layered structure in the button-type secondary battery according to Embodiment 1 of the present invention. FIG. 4 is a view illustrating hydrogen bonding between a chromate surface-treated portion and a PP-MAH layer in the button-type secondary battery according to Embodiment 1 of the present invention.

Referring to FIG. 2, a button-type secondary battery 100 according to Embodiment 1 of the present invention may be a button-type secondary battery 100 of which a diameter is greater than a height. Also, the button-type secondary battery 100 according to Embodiment 1 of the present invention may include an electrode assembly 110, a can body 120, a base plate 130, an electrode terminal 140, and an insulating gasket 150.

The electrode assembly 110 may be formed by stacking a positive electrode, a separator, and a negative electrode. The electrode assembly 110 may be a jelly roll-type electrode assembly 110 in which the electrodes and the separator are alternately stacked and wound.

The can body 120 may have a configuration in which the electrode assembly 110 is inserted. The can body 120 may have an internal space, and the electrode assembly 110 may be inserted into the internal space. The can body 120 may have an opening at an upper side thereof. That is, the can body 120 may be opened upward and include a bottom part and a sidewall.

The base plate 130 may cover the upper opening of the can body 120 and be bonded to the can body 120. This bonding may be bonding using welding. Particularly, an edge 132 of the base plate and the opening 121 of the can body may be bonded to each other by laser welding. Also, this type of laser welding may be seam welding that is advantageous for preventing a welding pin hole. In addition, a through-hole 131 may be formed in an inner center of the base plate 130. Here, the base plate may be made of a metal material, and the metal material may be at least one or more selected from SUS, nickel-plated carbon steel, and Al.

The electrode terminal 140 may be a terminal bonded to the through-hole 131 formed inside the base plate 130. The electrode terminal 140 may be a positive electrode terminal having a positive pole. This may be a result of the positive electrode of the electrode assembly 110 being connected to the electrode terminal 140. When the electrode terminal 140 has the positive pole, each of the can body 120 and the base plate 130 may have a negative pole. The negative electrode of the electrode assembly 110 may be connected to the can body 120 so that the can body 120 has the negative pole. As the base plate 130 is welded to the can body 120, the same negative pole as the can body 120 may be formed.

The electrode terminal may be configured so that at least a portion of the electrode terminal is inserted into the through-hole formed inside the base plate to cover the through-hole. The electrode terminal may be made of a metal material, and the metal material may be any one or more selected from SUS, nickel-plated carbon steel, and Al.

The insulating gasket 150 may be configured to insulate the electrode terminal 140 from the base plate 130. When the electrode terminal 140 has the positive pole, since the base plate 130 bonded to the body of the can body 120 that has a negative pole has a negative pole, and the electrode terminal 40 has a positive pole, a structure that insulates the electrode terminal 140 from the base plate is required. The structure is an insulating gasket 150.

In addition, the electrode terminal 140, the insulating gasket 150, and the base plate 130 may be bonded to each other by thermal fusion. In the related art, a rivet structure is used to couple the electrode terminal 140. However, in the button-type secondary battery 100 according to Embodiment 1 of the present invention, a thermal fusion structure instead of the rivet structure may be used.

Also, referring to FIG. 2, at least one of the electrode terminal 140 or the base plate 130 may be chromate surface-treated on a surface that is in contact with the insulating gasket 150. Alternatively, in order to increase in bonding force, both the electrode terminal 140 and the base plate 130 may be chromate surface-treated on both surfaces that are in contact with the insulating gasket 150.

The chromate surface treatment may mean that an object to be treated is put into a solution containing chromate or dichromate as a main component and is coated with a rust-preventing film (chromate film). In the case of the chromate treatment, conductivity may be given, have an effect of forming a corrosion-resistant film, and have an effect of improving adhesion. In addition, in the case of the chromate treatment, it may have self-healing at a worn portion of the film and have an advantage of forming a film without a thin film (plating layer).

In addition, in the button-type secondary battery 100 according to Embodiment 1 of the present invention, the insulating gasket 150 may have a PP-MAH (polypropylene modified with maleic anhydride) layer formed on a surface thereof. Thus, the bonding force when the electrode terminal 140 or the base plate 130, which is made of the metal, is bonded may be improved. Also, specifically, the insulating gasket 150 may have a three-layered structure of a PP-MAH layer 152, a polypropylene (PP) layer 151, and a PP-MAH layer 152 (see FIG. 3).

Referring to FIGS. 2 and 4, the chromate surface-treated portion of at least one of the electrode terminal 140 or the base plate 130 and the PP-MAH layer on the surface of the insulating gasket 150 may include portions that are hydrogen-bonded with each other.

Specifically, referring to FIG. 4, in the button-type secondary battery 100 according to Embodiment 1 of the present invention, the hydrogen bonding may be performed between OH of PP-MAH and O that is double bonded to chromium of a chromium oxide adhesive layer (in FIG. 4, the hydrogen-bonded portion is indicated by a dotted square box). The bonding force may be remarkably improved at the portion at which the hydrogen bonding is formed between the electrode terminal 140 and the insulating gasket 150 and between the base plate 130 and the insulating gasket 150.

Referring to FIG. 2, the electrode terminal 140 may include an insertion part 141 inserted into the through-hole 131 and a terminal plate part 142 extending outward from an upper end of the insertion part 141 and extending to have a plate shape.

Referring to FIG. 2, in the button-type secondary battery 100 according to Embodiment 1 of the present invention, a bottom surface of the terminal plate part 142, which is in contact with the insulating gasket 150, may be chromate surface-treated. In addition, a top surface of the base plate 130 facing the insulating gasket 150 may also be chromate surface-treated. In FIG. 2, a portion subjected to chromate surface treatment is indicated by reference symbol C. The hydrogen bonding with the PP-MAH layer 152 of the insulating gasket 150 may be performed at the portion C.

(In FIG. 2, which is a cross-sectional view of the button-type secondary battery 100, the chromate surface-treated portion that is indicated by reference symbol C is displayed only at a left side for convenience of understanding. Thus, the present invention should not be limited to that the chromate surface treatment is performed only at the left side as illustrated in FIG. 2.)

When using such the thermal fusion structure and the hydrogen bonding structure, the top plate assembly 190 formed by bonding the base plate 130 covering the opening 121 of the can body 120, into which the electrode assembly 110 is inserted, the electrode terminal 140 bonded to the base plate 130, and the insulating gasket 150, which insulates the base plate 130 from the electrode terminal 140, to each other may be significantly reduced in thickness. Particularly, the top plate assembly 190, in which the electrode terminal 140, the insulating gasket 150, and the base plate 130 are bonded to each other, may have a thickness of 0.4 mm to 0.8 mm (see FIG. 2) .

In addition, the top plate assembly 190 is significantly reduced in thickness, and strong bonding force between the base plate 130, the electrode terminal 140, and the insulating gasket 150 be formed.

Referring to FIG. 2, an insulating tape 160 may be attached to the bottom surface of the base plate 130. The insulating tape 160 may insulate the base plate 130 from the electrode assembly 110. Since the positive electrode and the negative electrode are wound together on the electrode assembly 110, short circuit may occur when the base plate 130 and the positive electrode are in contact with each other. However, the insulating tape 160 may prevent the short circuit from occurring.

### Embodiment 2

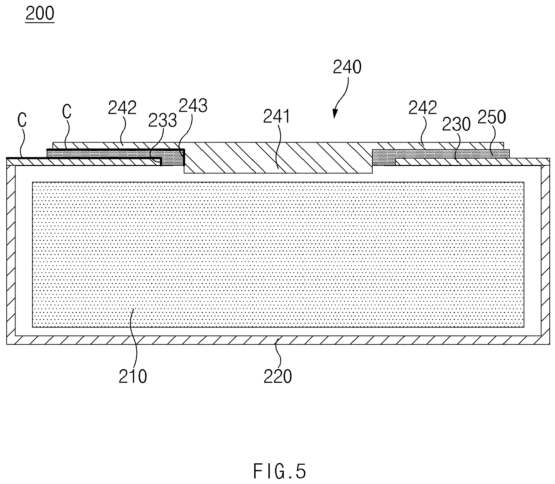

FIG. 5 is a cross-sectional view of a button-type secondary battery according to Embodiment 2 of the present invention.

Embodiment 2 of the present invention is different from Embodiment 1 in range of a chromate surface-treated portion.

The contents that are duplicated with Embodiment 1 will be omitted as much as possible, and Embodiment 2 will be described with a focus on the differences. That is, it is obvious that the contents that are not described in Embodiment 2 may be regarded as the contents of Embodiment 1 if necessary.

Referring to FIG. 5, in a button-type secondary battery 100 according to Embodiment 2 of the present invention, an outer circumferential surface 243 of an insertion part, which is in contact with an insulating gasket 250, may be chromate surface-treated.

In this case, a portion, at which the outer circumferential surface 243 of the insertion part is chromate-treated, and a portion, which is chromate surface-treated on a bottom surface of a terminal plate part 242, may be connected to each other. When connected in this manner, a geometrically bent structure may be formed (that is, a cross-section is formed in a L-shape as illustrated in FIG. 5) to further improve bonding force and airtightness. As described above, in the chromate-treated portion, hydrogen bonding may be formed by meeting PP-MAH on a surface of the insulating gasket.

In addition, in the button-type secondary battery 200 according to Embodiment 2 of the present invention, an inner surface 233 of the base plate having a through-hole, which is in contact with the insulating gasket 250, may be chromate surface-treated.

In this case, the portion, at which the inner surface 233 of the base plate is chromate-treated, and the portion, which is chromate surface-treated on a top surface of the base plate 230, may be connected to each other. When connected in this manner, a geometrically bent structure may be formed (in an L-shape) to more improve bonding force and airtightness. Even in this case, the hydrogen bonding may be formed between the chromate-treated portion and the surface of the insulating gasket.

While the embodiments of the present invention have been described with reference to the specific embodiments, it will be apparent to those skilled in the art that various changes and modifications may be made without departing from the spirit and scope of the invention as defined in the following claims.

### [Description of the Symbols]

1, 100, 200: Button-type secondary battery
110, 210: Electrode assembly
120, 220: Can body
121: Opening of can body
130, 230: Base plate
131: Through-hole
132: Edge of base plate
140, 240: Electrode terminal
141, 241: Insertion part
142, 242: Terminal plate part
150, 250: Insulating gasket
151: PP layer
152: PP-MAH layer
160: Insulating tape
190: Top plate assembly
233: Inner surface of base plate
243: Outer circumferential surface of insertion part

## Claims

1. A button-type secondary battery having a diameter greater than a height thereof, the button-type secondary battery comprising:
an electrode assembly;
a can body into which the electrode assembly is inserted;
a base plate configured to cover an opening of an upper end of the can body and bonded to the can body;
an electrode terminal of which at least a portion is inserted into a through-hole formed inside the base plate to cover the through-hole; and
an insulating gasket configured to insulate the electrode terminal from the base plate,
wherein the electrode terminal, the insulating gasket, and the base plate are bonded to each other through thermal fusion.

2. The button-type secondary battery of claim 1, wherein at least one of the electrode terminal or the base plate is chromate surface-treated on a surface that is in contact with the insulating gasket.

3. The button-type secondary battery of claim 2, wherein each of the electrode terminal and the base plate is chromate surface-treated on a surface that is in contact with the insulating gasket.

4. The button-type secondary battery of claim 2, wherein each of the electrode terminal and the base plate is made of a metal material,
wherein the metal material is any one or more selected from SUS, nickel-plated carbon steel, and Al.

5. The button-type secondary battery of claim 2, wherein a PP-MAH (polypropylene modified with maleic anhydride) layer is formed on a surface of the insulating gasket.

6. The button-type secondary battery of claim 5, wherein the insulating gasket has a three-layered structure of a PP-MAH layer, a polypropylene (PP) layer, and a PP-MAH layer.

7. The button-type secondary battery of claim 5, wherein the chromate surface-treated portion of at least one of the electrode terminal or the base plate and the PP-MAH layer of the insulating gasket 150 comprise portions that are hydrogen-bonded with each other.

8. The button-type secondary battery of claim 2, wherein the electrode terminal comprises an insertion part inserted into the through-hole and a terminal plate part extending outward from an upper end of the insertion part and extending to have a plate shape, and
a bottom surface of the terminal plate part, which is in contact with the insulating gasket, is chromate surface-treated.

9. The button-type secondary battery of claim 8, wherein a top surface of the base plate facing the insulating gasket is chromate surface-treated.

10. The button-type secondary battery of claim 9, wherein an outer circumferential surface of the insertion part, which is in contact with the insulating gasket, is chromate surface-treated.

11. The button-type secondary battery of claim 10, wherein an inner surface of the base plate having a through-hole, which is in contact with the insulating gasket, is chromate surface-treated.

12. The button-type secondary battery of claim 1, wherein the top plate assembly, in which the electrode terminal, the insulating gasket, and the base plate are bonded to each other, has a thickness of 0.4 mm to 0.8 mm.

13. The button-type secondary battery of claim 1, wherein an edge of the base plate and the opening of the can body are boned to each other by laser welding.

14. The button-type secondary battery of claim 1, wherein an insulating tape is attached to a bottom surface of the base plate,
wherein the insulating tape is configured to insulate the base plate from the electrode assembly.

15. The button-type secondary battery of claim 1, wherein the electrode terminal has a positive pole, and
each of the can body and the base plate has a negative pole.
